# EUROPEAN PATENT SPECIFICATION

(11) **EP 4 546 625 B1**
(45) Date of publication and mention of the grant of the patent: **25.02.2026**
(21) Application number: 24821737.4
(22) Date of filing: 13.05.2024
(51) Int. Cl.: H02K 15/085, H02K 3/28, H02K 3/12

(54) **METHOD FOR AUTOMATICALLY INSERTING SINGLE-LAYER AND DOUBLE-LAYER WINDINGS ON BASIS OF LARGE AND SMALL SLOT PUNCHING**
VERFAHREN ZUM AUTOMATISCHEN EINLEGEN VON EIN- UND DOPPELSCHICHTWICKLUNGEN AUF BASIS VON GROSS- UND KLEINSCHLITZSTANZEN
PROCÉDÉ D'INSERTION AUTOMATIQUE D'ENROULEMENTS MONOCOUCHE ET DOUBLE COUCHE SUR LA BASE D'UN POINÇONNAGE DE GRANDE FENTE ET DE PETITE FENTE

(30) Priority: 06.03.2024 CN 202410254455
(43) Date of publication of application: 30.04.2025
(73) Proprietor: Shanxi Electric Motor Manufacturing Co., Ltd., Taiyuan, Shanxi 030032 (CN)
(72) Inventor: CAO, Gailan, Taiyuan, Shanxi 030032 (CN); LI, Sisi, Taiyuan, Shanxi 030032 (CN); YUE, Jin, Taiyuan,Shanxi 030032 (CN); MA, Yangdong, Taiyuan, Shanxi 030032 (CN); JIA, Yuqing, Taiyuan, Shanxi 030032 (CN)
(74) Representative: Spengler, Robert
(86) International application number: PCT/CN2024/092792
(87) International publication number: WO 2025/030959

(56) References cited:
- CN-A- 113 629 905
- CN-A- 115 347 750
- CN-A- 115 347 750
- CN-A- 117 833 575
- CN-U- 214 674 607
- US-A- 5 898 251
- US-B1- 8 008 827
- US-B2- 6 812 610

## Description

### TECHNICAL FIELD

The present invention belongs to the technical field of motor manufacturing, in particular to an automatic wire embedding method for single-and double-layer windings based on lamination having large-and small-slots.

### BACKGROUND

With the improvement of digital and intelligent manufacturing level in the motor manufacturing industry, the winding of a three-phase asynchronous motor is manufactured by automatic wire embedding instead of manual wire embedding. The realization of intelligent manufacturing improves the consistency of winding and the quality stability of mass-produced motors and at the same time improves production efficiency.

The automatic wire embedding methods for single-and double-layer windings (single-double layer windings) and double-layer windings in the present industry are all implemented by distributing the three-phase windings in three layers at the circumference, in which one phase of winding is located at the bottom of the slot, one phase of winding is located at the opening of the slot, and half of one phase of winding is located at the opening of the slot and the other half is located at the bottom of the slot. As such, the distribution positions of the three phases are asymmetrical at the circumference, which leads to the result that the slot leakage reactance and the end leakage reactance of each phase conductor are asymmetrical, the no-load current and short-circuit current of the whole machine are seriously uneven in the factory test, with an unevenness up to 5%-7%, and the stray loss of the type test data is higher than that of manual wire embedding. Moreover, due to the three-layer distribution of the three phases of windings, in order to ensure the embedding manufacturability of the winding at the opening of the slot, it is necessary to lengthen the half turn length of the winding, which leads to the increase of copper loss in the whole machine. Document US5898251 discloses a related method.

### SUMMARY

In order to at least partially solve the technical problems existing in the prior art, the present invention provides an automatic wire embedding method for single-and double-layer windings based on lamination having large-and small-slots (large-small slots).

According to the automatic wire embedding method for single-and double-layer windings based on lamination having large-and small-slots, number of stator slots of a motor of which windings to be embedded is 72 including stator slots No. 1 to No.72, and number of phases of the motor is three, wherein the method comprises: performing six times embedding to complete the wire embedding of the winding, and completing embedding of respective one pole-phase group coil for two phases among three phases in each time embedding, wherein the windings are single-and double-layer windings, and each pole-phase group coil consists of five coils, wherein a coil with a largest span is a single-layer coil and is pulled into small stator slots, and the other four coils are double-layer coils and are pulled into large stator slots, wherein:
a first time of embedding comprises: taking respective one pole-phase group coil U1 and W1 of two phases among three phases, arranging the two pole-phase group coils U1 and W1 in an overlapping manner, wherein the pole-phase group coil U1 occupies stator slots No.1-5 and No.14-18, and the spans of the five coils of the pole-phase group coil U1 are No.1 to No.18, No.2 to No.17, No.3 to No.16, No.4 to No.15, No.5 to No.14, wherein the pole-phase group coil W1 occupies stator slots No.7-11 and No.20-24, and the spans of the five coils of the pole-phase group coil W1 are No.7 to No.24, No.8 to No.23, No.9 to No.22, No.10 to No.21, No.11 to No.20; winding all the coils of the pole-phase group coils U1 and W1 on coil cups according to the corresponding span of each coil of the pole-phase group coils U1 and W1, pulling the single-layer coils with the largest span into the small stator slots, and puling the other double-layer coils into the large stator slots;
a second time of embedding comprises: taking respective one pole-phase group coil V1 and U2 of two phases among three phases, arranging the two pole-phase group coils V1 and U2 in an overlapping manner, wherein the pole-phase group coil V1 occupies stator slots No. 13-17 and No. 26-30, and the spans of the five coils of the pole-phase group coil V1 are No.13 to No.30, No.14 to No.29, No.15 to No.28, No.16 to No.27, No.17 to No.26, wherein the pole-phase group coil U2 occupies stator slots No. 19-23 and No. 32-36, and the spans of the five coils of the pole-phase group coil U2 are No.19 to No.36, No.20 to No.35, No.21 to No.34, No.22 to No.33, No.23 to No.32; winding all the coils of the pole-phase group coils V1 and U2 on coil cups according to the corresponding span of each coil of the pole-phase group coils V1 and U2; rotating the stator core 60 degrees clockwise from an origin, pulling the single-layer coils with the largest span into the small stator slots, and pulling the other double-layer coils into the large stator slots;
a third time of embedding comprises: taking respective one pole-phase group coil W2 and V2 of two phases among three phases, arranging the two pole-phase group coils W2 and V2 in an overlapping manner, wherein the pole-phase group coil W2 occupies stator slots No. 25-29 and No. 38-42, and the spans of the five coils of the pole-phase group coil W2 are No.25 to No.42, No.26 to No.41, No.27 to No.40, No.28 to No.39, No.29 to No.38, wherein the pole-phase group coil V2 occupies stator slots No. 31-35 and No. 44-48, and the spans of the five coils of the pole-phase group coil V2 are No.31 to No.48, No.32 to No.47, No.33 to No.46, No.34 to No.45, No.35 to No.44; winding all the coils of the pole-phase group coils W2 and V2 on coil cups according to the corresponding span of each coil of the pole-phase group coils W2 and V2; rotating the stator core 120 degrees clockwise from the origin, pulling the single-layer coils with the largest span into the small stator slots, and pulling the other double-layer coils into the large stator slots;
a fourth time of embedding comprise: taking respective one pole-phase group coil V3 and W3 of two phases among three phases, arranging the two pole-phase group coils V3 and W3 in an overlapping manner, wherein the pole-phase group coil V3 occupies stator slots No. 8-12 and No. 67-71, and the spans of the five coils of the pole-phase group coil V3 are No.12 to No.67, No.11 to No.68, No.10 to No.69, No.9 to No.70, No.8 to No.71, wherein the pole-phase group coil W3 occupies stator slots No. 2-6 and No. 61-65, and the spans of the five coils of the pole-phase group coil W3 are No.6 to No.61, No.5 to No.62, No.4 to No.63, No.3 to No.64, No.2 to No.65; winding all the coils of the pole-phase group coils V3 and W3 on coil cups according to the corresponding span of each coil of the pole-phase group coils V3 and W3; rotating the stator core 60 degrees counterclockwise from the origin, pulling the single-layer coils with the largest span into the small stator slots, and pulling the other double-layer coils into the large stator slots;
a fifth time of embedding comprises: taking respective one pole-phase group coil U3 and V4 of each of two phases among three phases, arranging the two pole-phase group coils U3 and V4 in an overlapping manner, wherein the pole-phase group coil U3 occupies stator slots No. 68-72 and No. 55-59, and the spans of the five coils of the pole-phase group coil U3 are No.55 to No.72, No.56 to No.71, No.57 to No.70, No.58 to No.69, No.59 to No.68, wherein the pole-phase group coil V4 occupies stator slots No. 62-66 and No. 49-53, and the spans of the five coils of the pole-phase group coil V4 are No.49 to No.66, No.50 to No.65, No.51 to No.64, No.52 to No.63, No.53 to No.62; winding all the coils of the pole-phase group coils U3 and V4 on coil cups according to the corresponding span of each coil of the pole-phase group coils U3 and V4; rotating the stator core 120 degrees counterclockwise from the origin, pulling the single-layer coils with the largest span into the small stator slots, and pulling the other double-layer coils into the large stator slots; and
a sixth time of embedding comprises: taking respective one pole-phase group coil W4 and U4 of each of two phases among three phases, arranging the two pole-phase group coils W4 and U4 in an overlapping manner, wherein the pole-phase group coil W4 occupies stator slots No. 56-60 and No. 43-47, and the spans of the five coils of the pole-phase group coil W4 are No.43 to No.60, No.44 to No.59, No.45 to No.58, No.46 to No.57, No.47 to No.56, wherein the pole-phase group coil U4 occupies stator slots No. 50-54 and No. 37-41, and the spans of the five coils of the pole-phase group coil U4 are No.37 to No.54, No.38 to No.53, No.39 to No.52, No.40 to No.51, No.41 to No.50; winding all the coils of the pole-phase group coils W4 and U4 on coil cups according to the corresponding span of each coil of the pole-phase group coils W4 and U4; rotating the stator core 180 degrees counterclockwise from the origin, pulling the single-layer coils with the largest span into the small stator slots, and pulling the other double-layer coils into the large stator slots.

Further, in the above automatic wire embedding method for single-and double-layer windings based on lamination having large-and small-slots, slot insulations based on slot-shaped perimeters are respectively disposed in the large stator slots and the small stator slots.

Further, in the above automatic wire embedding method for single-and double-layer windings based on lamination having large-and small-slots, the small stator slot is a single-layer slot, and a single-layer coil is pulled into the small stator slot, followed by punching of cover paper.

Further, in the above automatic wire embedding method for single-and double-layer windings based on lamination having large-and small-slots, the large stator slot is a double-layer slot, and a double-layer coil is pressed by a coil pressing die after a lower layer side of the coil being embedded in the large stator slot, and an inter-layer phase segregated paper is punched.

The automatic wire embedding method for single-and double-layer windings based on lamination having large-and small-slots has the following advantages and beneficial effects:
(1) The automatic wire embedding method for single-and double-layer windings based on lamination having large-and small-slots ensures the symmetrical distribution of each phase conductor in the core slot and the end space, reduces the unevenness of no-load current and short-circuit current of the whole machine, and reduces stray loss.
(2) Reasonable arrangement of the positions of the coil pressing dies according to the wire embedding sequence is beneficial to the slot entry of the upper layer side of the coils and the punching of the cover paper, thus improving the product qualification rate.
(3) In the method, six times embedding and arranging two pole-phase group coils in an overlapping manner (arranging one pole-phase group coil at an upper position and the other pole-phase group coil at a lower position) are adopted, which effectively shortens the winding half turn length and reduces the copper weight of the stator, thus reducing the material cost of the motor and the copper loss of the motor; at the same time, the stability of interphase insulation placement is improved, and the risk of interphase fault of products is further reduced; the single-layer coil is pulled into the small stator slots, which effectively shortens the length of the core with the same power, and improves the overall efficiency of the motor by 0.7%.

### BRIEF DESCRIPTION OF DRAWINGS

In order to explain the technical solution in the embodiment of the present invention or the prior art more clearly, the drawings needed in the description of the embodiment or the prior art will be briefly introduced below. Obviously, the drawings in the following description are only used for further understanding of the embodiment of the present invention and constitute a part of the present invention. For those skilled in the art, other drawings can be obtained according to these drawings without creative work. In the drawings:
FIG. 1 is a schematic diagram of a first time embedding by using the automatic wire embedding method for single-and double-layer windings based on lamination having large-and small-slots of the present invention;
FIG. 2 is a schematic diagram of a second time embedding by using automatic wire embedding method for single-and double-layer windings based on lamination having large-and small-slots of the present invention;
FIG. 3 is a schematic diagram of a third time embedding by using the automatic wire embedding method for single-and double-layer windings based on lamination having large-and small-slots of the present invention;
FIG. 4 is a schematic diagram of a fourth time embedding by using the automatic wire embedding method for single-and double-layer windings based on lamination having large-and small-slots of the present invention;
FIG. 5 is a schematic diagram of a fifth time embedding by using the automatic wire embedding method for single-and double-layer windings based on lamination having large-and small-slots of the present invention;
FIG. 6 is a schematic diagram of a sixth time embedding by using the automatic wire embedding method for single-and double-layer windings based on lamination having large-and small-slots of the present invention.

### DESCRIPTION OF EMBODIMENTS

In order to make the object, technical solution and advantages of the present invention more clear, the technical solution of the present invention will be described clearly and completely with specific embodiments of the present invention and corresponding drawings. Obviously, the described embodiment is only part of, rather than all of the embodiments of the present invention. Based on the embodiment of the present invention, all other embodiments obtained by ordinary technicians in the field without creative labor belong to the scope of protection of the present invention.

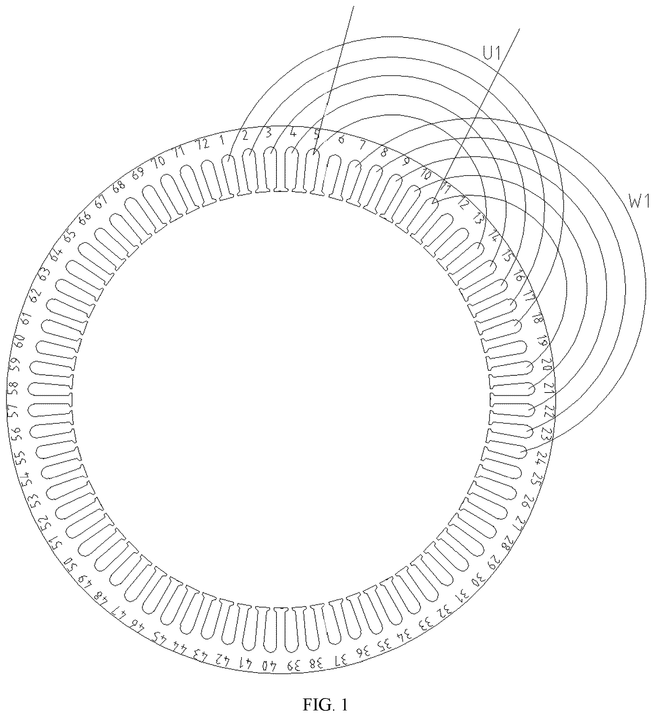

As shown in FIG. 1 to FIG. 6, an embodiment of the present invention provides an automatic wire embedding method for single-and double-layer windings based on lamination having large-and small-slots. In the present invention, number of stator slots of a motor of which windings to be embedded is 72, and number of phases of the motor is three, the method comprises: performing six times embedding to complete the wire embedding of the winding, and completing embedding of respective one pole-phase group coil for two phases among three phases in each time embedding, wherein the windings are single-and double-layer windings, and each pole-phase group coil consists of five coils, in which a coil with a largest span is a single-layer coil and is pulled into small stator slots, and the other four coils are double-layer coils and are pulled into large stator slot.

Further, in the automatic wire embedding method for single-and double-layer windings based on lamination having large-and small-slots provided in the embodiment of the present invention, the first time of embedding is implemented as follows: taking respective one pole-phase group coil of two phases among three phases, arranging the two pole-phase group coils in an overlapping manner, winding all the coils of the pole-phase group coils on coil cups according to the corresponding span of each coil of the pole-phase group coils, pulling the single-layer coils with the largest span into the small stator slots, and puling the other double-layer coils into the large stator slots.

Further, in the automatic wire embedding method for single-and double-layer windings based on lamination having large-and small-slots provided in the embodiment of the present invention, the second time of embedding is implemented as follows: taking respective one pole-phase group coil of two phases among three phases, arranging the two pole-phase group coils in an overlapping manner, winding all the coils of the pole-phase group coils on coil cups according to the corresponding span of each coil of the pole-phase group coils, rotating the stator core 60 degrees clockwise from an origin, pulling the single-layer coils with the largest span into the small stator slots, and puling the other double-layer coils into the large stator slots.

Further, in the automatic wire embedding method for single-and double-layer windings based on lamination having large-and small-slots provided in the embodiment of the present invention, the third time of embedding is implemented as follows: taking respective one pole-phase group coil of two phases among three phases, arranging the two pole-phase group coils in an overlapping manner, winding all the coils of the pole-phase group coils on coil cups according to the corresponding span of each coil of the pole-phase group coils, rotating the stator core 120 degrees clockwise from the origin, pulling the single-layer coils with the largest span into the small stator slots, and puling the other double-layer coils into the large stator slots.

Further, in the automatic wire embedding method for single-and double-layer windings based on lamination having large-and small-slots provided in the embodiment of the present invention, the fourth time of embedding is implemented as follows: taking respective one pole-phase group coil of two phases among three phases, arranging the two pole-phase group coils in an overlapping manner, winding all the coils of the pole-phase group coils on coil cups according to the corresponding span of each coil of the pole-phase group coils, rotating the stator core 60 degrees counterclockwise from the origin, pulling the single-layer coils with the largest span into the small stator slots, and puling the other double-layer coils into the large stator slots.

Further, in the automatic wire embedding method for single-and double-layer windings based on lamination having large-and small-slots provided in the embodiment of the present invention, the fifth time of embedding is implemented as follows: taking respective one pole-phase group coil of two phases among three phases, arranging the two pole-phase group coils in an overlapping manner, winding all the coils of the pole-phase group coils on coil cups according to the corresponding span of each coil of the pole-phase group coils, rotating the stator core 120 degrees counterclockwise from the origin, pulling the single-layer coils with the largest span into the small stator slots, and puling the other double-layer coils into the large stator slots.

Further, in the automatic wire embedding method for single-and double-layer windings based on lamination having large-and small-slots provided in the embodiment of the present invention, the sixth time of embedding is implemented as follows: taking respective one pole-phase group coil of two phases among three phases, arranging the two pole-phase group coils in an overlapping manner, winding all the coils of the pole-phase group coils on coil cups according to the corresponding span of each coil of the pole-phase group coils, rotating the stator core 180 degrees counterclockwise from the origin, pulling the single-layer coils with the largest span into the small stator slots, and puling the other double-layer coils into the large stator slots.

In the embodiment of the present invention, by performing six times embedding according to the method defined above, the coil sides are arranged in the large stator slots in up-and-down manner, thus effectively shortens the winding half turn length; through the clockwise rotation of the stator core from the origin during the second and the third embedding and the counterclockwise rotation of the stator core from the origin during the fourth, the fifth and the sixth embedding, it is effectively ensured that for each phase, half of the coil sides are placed at the bottom of the slot core slot and half of the coil sides are placed at the opening of the slot core.

Further, in the automatic wire embedding method for single-and double-layer windings based on lamination having large-and small-slots provided in the embodiment of the present invention, slot insulations are respectively disposed in the large stator slots and the small stator slots according to slot-shaped perimeters.

Further, in the automatic wire embedding method for single-and double-layer windings based on lamination having large-and small-slots provided in the embodiment of the present invention, the small stator slot is a single-layer slot, and a single-layer coil is pulled into the small stator slot, followed by punching of cover paper, thereby effectively shortening the core length with the same power.

Further, in the automatic wire embedding method for single-and double-layer windings based on lamination having large-and small-slots provided in the embodiment of the present invention, the large stator slot is a double-layer slot, and a double-layer coil is pressed by a coil pressing die after a lower layer side of the coil being embedded in the large stator slot, and an inter-layer phase segregated paper is punched, which is beneficial to the slot entry of the upper layer side of the coils and the punching of the cover paper, thus improving the product qualification rate.

In order to make the technical solution of the present invention more clear, the technical solution of the present invention will be described clearly and completely with specific examples. Obviously, the described embodiment is only part of, rather than all of the embodiments of the present invention.

### Embodiment 1

In this embodiment 1, the number of stator slots is 72 (stator slots No.1 to No.72), the windings are 4-pole single-and double-layer concentric windings, and the number of motor phases is three.

The wire embedding of the winding is completed by performing six times embedding, and the embedding of respective one pole-phase group coil for two phases among three phases is completed in each time embedding, wherein the windings are single-and double-layer windings, and each pole-phase group coil consists of five coils, wherein a coil with a largest span is a single-layer coil and is pulled into small stator slots, and the other four coils are double-layer coils and are pulled into large stator slots.

Referring to FIG. 1, in the first time of embedding, respective one pole-phase group coil U1 and W1 of two phases among three phases is wound, the two pole-phase group coils U1 and W1 are arranged in an overlapping manner, wherein the pole-phase group coil U1 occupies stator slots No.1-5 and No. 14-18, and the spans of the five coils of the pole-phase group coil U1 are No.1 to No.18, No.2 to No.17, No.3 to No.16, No.4 to No.15, No.5 to No.14, wherein the pole-phase group coil W1 occupies stator slots No.7-11 and No.20-24, and the spans of the five coils of the pole-phase group coil W1 are No.7 to No.24, No.8 to No.23, No.9 to No.22, No.10 to No.21, No.11 to No.20; all the coils of the pole-phase group coils U1 and W1 are wound on coil cups according to the corresponding span of each coil of the pole-phase group coils U1 and W1. Then the coils are drawn into the corresponding stator slots after being wound, wherein the coils with the largest spans No.1 to No.18 and No.7 and No.24 are single-layer coils and are pulled into small stator slots No.1 and No.18, No.7 and No.24, followed by punching of cover paper; wherein the other coils are double-layer coils and are pulled into large stator slots No.2, No.17, No.3, No.16, No.4, No.15, No.5, No.14, No.8, No.23, No.9, No.22, No.10, No.21, No.11, No.20, followed by punching of inter-layer phase segregated paper and coil pressing in the corresponding double-layer slots with a coil pressing die.

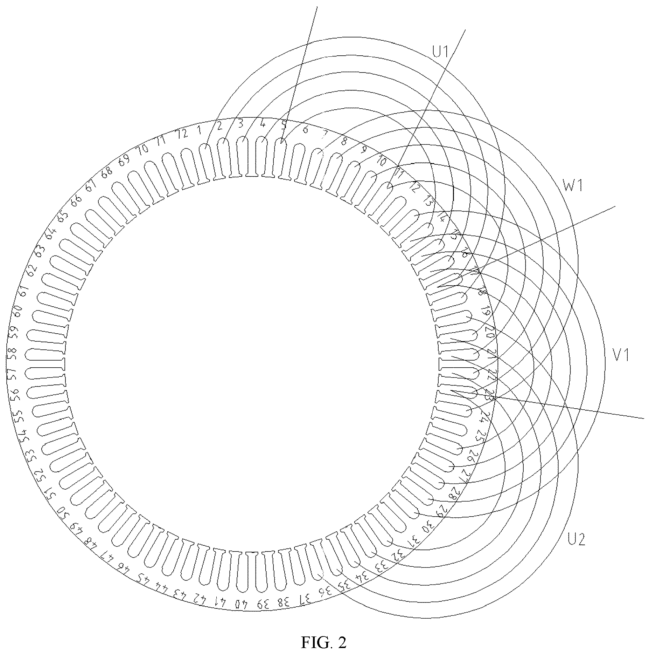

Referring to FIG. 2, in the second time of embedding, respective one pole-phase group coil V1 and U2 of two phases among three phases is wound, the two pole-phase group coils V1 and U2 are arranged in an overlapping manner, wherein the pole-phase group coil V1 occupies stator slots No.13-17 and No.26-30, and the spans of the five coils of the pole-phase group coil V1 are No.13 to No.30, No.14 to No.29, No.15 to No.28, No.16 to No.27, No.17 to No.26, wherein the pole-phase group coil U2 occupies stator slots No.19-23 and No.32-36, and the spans of the five coils of the pole-phase group coil U2 are No.19 to No.36, No.20 to No.35, No.21 to No.34, No.22 to No.33, No.23 to No.32; all the coils of the pole-phase group coils V1 and U2 are wound on coil cups according to the corresponding span of each coil of the pole-phase group coils V1 and U2. The stator core rotates 60 degrees clockwise from an origin. Then the coils are drawn into the corresponding stator slots after being wound, wherein the coils with the largest spans No.13 to No.30 and No.19 and No.36 are single-layer coils and are pulled into small stator slots No.13 and No.30, No.19 and No.36, followed by punching of cover paper; wherein the other coils are double-layer coils and are pulled into large stator slots No.14, No.29, No.15, No.28, No.16, No.27, No.17, No.26, No.20, No.35, No.21, No.34, No.22, No.33, No.23, No.32, followed by punching of inter-layer phase segregated paper and coil pressing in the corresponding double-layer slots with a coil pressing die.

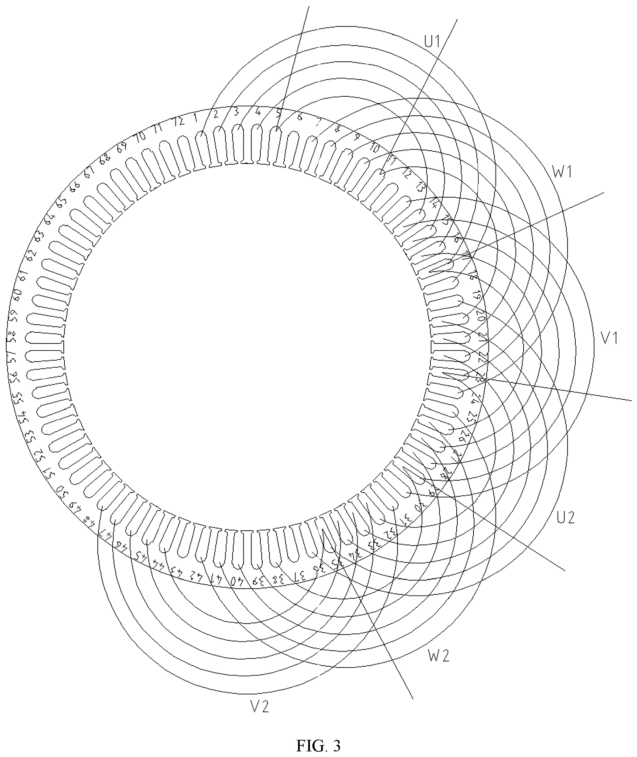

Referring to FIG. 3, in the third time of embedding, respective one pole-phase group coil W2 and V2 of two phases among three phases is wound, the two pole-phase group coils W2 and V2 are arranged in an overlapping manner, wherein the pole-phase group coil W2 occupies stator slots No.25-29 and No.38-42, and the spans of the five coils of the pole-phase group coil W2 are No.25 to No.42, No.26 to No.41, No.27 to No.40, No.28 to No.39, No.29 to No.38, wherein the pole-phase group coil V2 occupies stator slots No.31-35 and No.44-48, and the spans of the five coils of the pole-phase group coil V2 are No.31 to No.48, No.32 to No.47, No.33 to No.46, No.34 to No.45, No.35 to No.44; all the coils of the pole-phase group coils W2 and V2 are wound on coil cups according to the corresponding span of each coil of the pole-phase group coils W2 and V2. The stator core rotates 120 degrees clockwise from the origin. Then the coils are drawn into the corresponding stator slots after being wound, wherein the coils with the largest spans No.25 to No.42 and No.31 and No.48 are single-layer coils and are pulled into small stator slots No.25 and No.42, No.31 and No.48, followed by punching of cover paper; wherein the other coils are double-layer coils and are pulled into large stator slots No.26, No.41, No.27, No.40, No.28, No.39, No.29, No.38, No.32, No.47, No.33, No.46, No.34, No.45, No.35, No.44, followed by punching of inter-layer phase segregated paper and coil pressing in the corresponding double-layer slots with a coil pressing die.

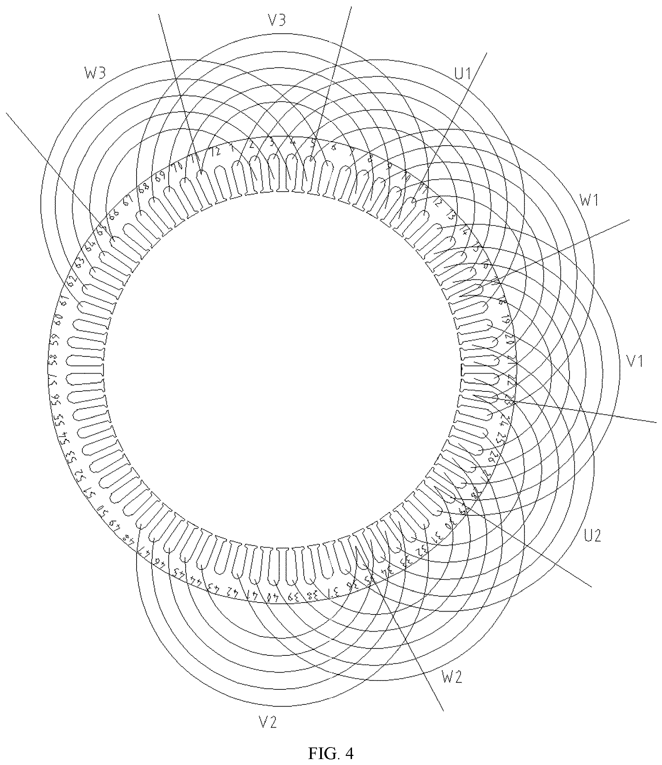

Referring to FIG. 4, in the fourth time of embedding, respective one pole-phase group coil V3 and W3 of two phases among three phases is wound, the two pole-phase group coils V3 and W3 are arranged in an overlapping manner, wherein the pole-phase group coil V3 occupies stator slots No.8-12 and No.67-71, and the spans of the five coils of the pole-phase group coil V3 are No.12 to No.67, No.11 to No.68, No.10 to No.69, No.9 to No.70, No.8 to No.71, wherein the pole-phase group coil W3 occupies stator slots No.2-6 and No.61-65, and the spans of the five coils of the pole-phase group coil W3 are No.6 to No.61, No.5 to No.62, No.4 to No.63, No.3 to No.64, No.2 to No.65; all the coils of the pole-phase group coils V3 and W3 are wound on coil cups according to the corresponding span of each coil of the pole-phase group coils V3 and W3. The stator core rotates 60 degrees counterclockwise from the origin. Then the coils are drawn into the corresponding stator slots after being wound, wherein the coils with the largest spans No.12 to No.67 and No.6 and No.61 are single-layer coils and are pulled into small stator slots No.12 and No.67, No.6 and No.61, followed by punching of cover paper; wherein the other coils are double-layer coils and are pulled into large stator slots No.11, No.68, No.10, No.69, No.9, No.70, No.8, No.71, No.5, No.62, No.4, No.63, No.3, No.64, No.2, No.65, followed by punching of inter-layer phase segregated paper and coil pressing in the corresponding double-layer slots with a coil pressing die.

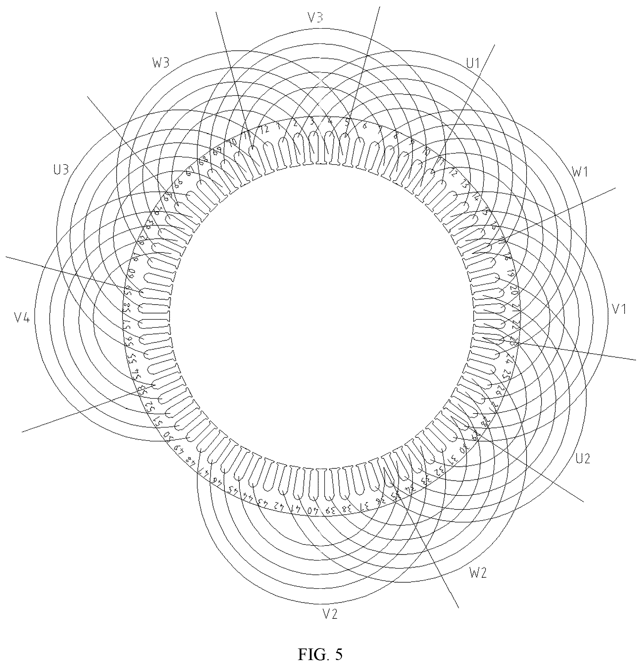

Referring to FIG. 5, in the fifth time of embedding, respective one pole-phase group coil U3 and V4 of two phases among three phases is wound, the two pole-phase group coils U3 and V4 are arranged in an overlapping manner, wherein the pole-phase group coil U3 occupies stator slots No.68-72 and No.55-59, and the spans of the five coils of the pole-phase group coil U3 are No.55 to No.72, No.56 to No.71, No.57 to No.70, No.58 to No.69, No.59 to No.68, wherein the pole-phase group coil V4 occupies stator slots No.62-66 and No.49-53, and the spans of the five coils of the pole-phase group coil V4 are No.49 to No.66, No.50 to No.65, No.51 to No.64, No.52 to No.63, No.53 to No.62; all the coils of the pole-phase group coils U3 and V4 are wound on coil cups according to the corresponding span of each coil of the pole-phase group coils U3 and V4. The stator core rotates 120 degrees counterclockwise from the origin. Then the coils are drawn into the corresponding stator slots after being wound, wherein the coils with the largest spans No.55 to No.72 and No.49 and No.66 are single-layer coils and are pulled into small stator slots No.55 and No.72, No.49 and No.66, followed by punching of cover paper; wherein the other coils are double-layer coils and are pulled into large stator slots No.56, No.71, No.57, No.70, No.58, No.69, No.59, No.68, No.50, No.65, No.51, No.64, No.52, No.63, No.53, No.62, followed by punching of inter-layer phase segregated paper and coil pressing in the corresponding double-layer slots with a coil pressing die.

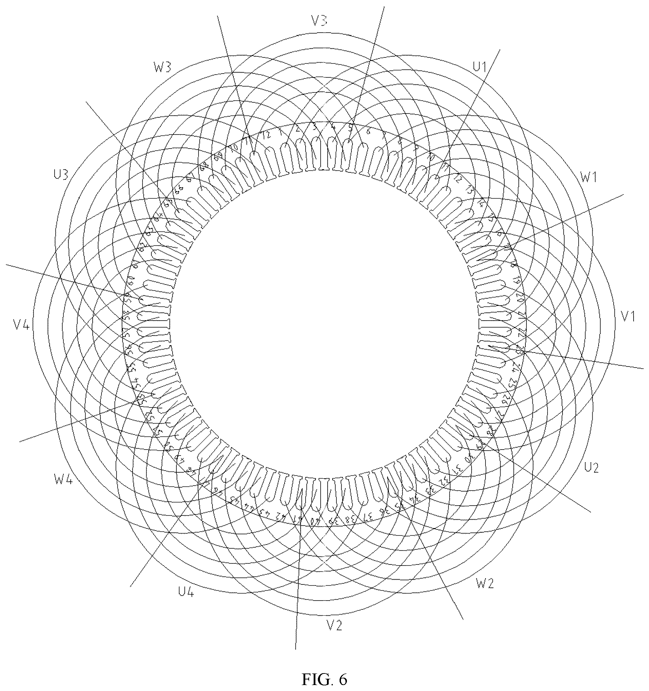

Referring to FIG. 6, in the sixth time of embedding, respective one pole-phase group coil W4 and U4 of two phases among three phases is wound, the two pole-phase group coils W4 and U4 are arranged in an overlapping manner, wherein the pole-phase group coil W4 occupies stator slots No.56-60 and No.43-47, and the spans of the five coils of the pole-phase group coil W4 are No.43 to No.60, No.44 to No.59, No.45 to No.58, No.46 to No.57, No.47 to No.56, wherein the pole-phase group coil U4 occupies stator slots No.50-54 and No.37-41, and the spans of the five coils of the pole-phase group coil U4 are No.37 to No.54, No.38 to No.53, No.39 to No.52, No.40 to No.51, No.41 to No.50; all the coils of the pole-phase group coils W4 and U4 are wound on coil cups according to the corresponding span of each coil of the pole-phase group coils W4 and U4. The stator core rotates 180 degrees counterclockwise from the origin. Then the coils are drawn into the corresponding stator slots after being wound, wherein the coils with the largest spans No.43 to No.60 and No.37 and No.54 are single-layer coils and are pulled into small stator slots No.43 and No.60, No.37 and No.54, followed by punching of cover paper; wherein the other coils are double-layer coils and are pulled into large stator slots No.44, No.59, No.45, No.58, No.46, No.57, No.47, No.56, No.38, No.53, No.39, No.52, No.40, No.51, No.41, No.50, followed by punching of inter-layer phase segregated paper and coil pressing in the corresponding double-layer slots with a coil pressing die.

After wire embedding according to the above method, the arrangement of coils is close to the manual embedding form, in which the V-phase is completely the same as the manual embedding form with side cover, four groups of coil sides are all arranged in up-and-down manner. Two groups of coils for the U and W phases are the same as the manual embedding form, the coil sides are in up-and-down manner, one group of coil sides being all up and one group of coil sides being all down. From the point of view of the symmetry of the magnetic circuit of each phase conductor of the whole motor, the coil groups in the three-phase winding are completely balanced, and for each phase, half of the coil sides are placed at the bottom of the slot core slot and half of the coil sides are placed at the opening of the slot core.

To sum up, compared with the prior art, the automatic wire embedding method for single-and double-layer windings based on lamination having large-and small-slots in the embodiment of the present invention has the following advantages and beneficial effects:
(1) The automatic wire embedding method for single-and double-layer windings based on lamination having large-and small-slots ensures the symmetrical distribution of each phase conductor in the core slot and the end space, reduces the unevenness of no-load current and short-circuit current of the whole machine, and reduces stray loss.
(2) Reasonable arrangement of the positions of the coil pressing dies according to the wire embedding sequence is beneficial to the slot entry of the upper layer side of the coils and the punching of the cover paper, thus improving the product qualification rate.
(3) In the method, six times embedding and arranging two pole-phase group coils in an overlapping manner (arranging one pole-phase group coil at an upper position and the other pole-phase group coil at a lower position) are adopted, which effectively shortens the winding half turn length and reduces the copper weight of the stator, thus reducing the material cost of the motor and the copper loss of the motor; at the same time, the stability of interphase insulation placement is improved, and the risk of interphase fault of products is further reduced; the single-layer coil is pulled into the small stator slots, which effectively shortens the length of the core with the same power, and improves the overall efficiency of the motor by 0.7%.

It should be noted that in this paper, unless otherwise specified and limited, the term "connection" or its synonyms should be broadly understood. For example, "connection" can be a fixed connection or a detachable connection; it can be a mechanical connection or an electrical connection; it may be a direct connection or indirect connection through an intermediary, and it may be the internal communication between two elements or the interaction between two elements. For those skilled in the art, the specific meanings of the above terms in the present invention can be understood according to specific conditions. Moreover, expressions such as "first" and "second" are only used to distinguish one entity or operation from another entity or operation, and do not necessarily require or imply any such actual relationship or order between these entities or operations. Meanwhile, the terms "including", "comprising" or any other variation thereof are intended to cover non-exclusive inclusion, so that a process, method, article or equipment including a series of elements includes not only those elements, but also other elements not explicitly listed or elements inherent to such process, method, article or equipment. In addition, the words "front", "back", "left", "right", "upper" and "lower" in this paper refer to the placement state shown in the drawings.

Finally, it should be explained that the above embodiments are only used to illustrate, rather than to limit the technical solution of the present invention. Although the present invention has been described in detail with reference to the foregoing embodiments, those skilled in the art should understand that it is still possible to modify the technical solutions described in the foregoing embodiments, or to replace some technical features with equivalents. The present invention is not limited to the described embodiments. Alterations and/or modifications of the described embodiments are contemplated as being alternative forms of the invention as far as they do not depart from the scope of the invention, which is defined by the appended claims.

## Claims

1. An automatic wire embedding method for single-and double-layer windings based on lamination having large-and small-slots, wherein number of stator slots of a motor of which windings to be embedded is 72 including stator slots No. 1 to No.72, and number of phases of the motor is three, wherein the method comprises: performing six times embedding to complete the wire embedding of the windings, and embedding of respective one pole-phase group coil for two phases among three phases in each time embedding, wherein the windings are single-and double-layer windings, and each pole-phase group coil consists of five coils in which a coil with a largest span is a single-layer coil and is pulled into small stator slots and the other four coils are double-layer coils and are pulled into large stator slots, wherein,
a first time of embedding comprises: taking respective one pole-phase group coil U1 and W1 of two phases among three phases, arranging the two pole-phase group coils U1 and W1 in an overlapping manner, wherein the pole-phase group coil U1 occupies stator slots No.1-5 and No.14-18, and the spans of the five coils of the pole-phase group coil U1 are No.1 to No.18, No.2 to No.17, No.3 to No.16, No.4 to No.15, No.5 to No.14, wherein the pole-phase group coil W1 occupies stator slots No.7-11 and No.20-24, and the spans of the five coils of the pole-phase group coil W1 are No.7 to No.24, No.8 to No.23, No.9 to No.22, No.10 to No.21, No.11 to No.20; winding all the coils of the pole-phase group coils U1 and W1 on coil cups according to the corresponding span of each coil of the pole-phase group coils U1 and W1, pulling single-layer coils with the largest span into the small stator slots, and puling other double-layer coils into the large stator slots;
a second time of embedding comprises: taking respective one pole-phase group coil V1 and U2 of two phases among three phases, arranging the two pole-phase group coils V1 and U2 in an overlapping manner, wherein the pole-phase group coil V1 occupies stator slots No. 13-17 and No. 26-30, and the spans of the five coils of the pole-phase group coil V1 are No.13 to No.30, No.14 to No.29, No.15 to No.28, No.16 to No.27, No.17 to No.26, wherein the pole-phase group coil U2 occupies stator slots No. 19-23 and No. 32-36, and the spans of the five coils of the pole-phase group coil U2 are No.19 to No.36, No.20 to No.35, No.21 to No.34, No.22 to No.33, No.23 to No.32; winding all the coils of the pole-phase group coils V1 and U2 on coil cups according to the corresponding span of each coil of the pole-phase group coils V1 and U2; rotating stator core 60 degrees clockwise from an origin; pulling single-layer coils with the largest span into the small stator slots, and pulling other double-layer coils into the large stator slots;
a third time of embedding comprises: taking respective one pole-phase group coil W2 and V2 of two phases among three phases, arranging the two pole-phase group coils W2 and V2 in an overlapping manner, wherein the pole-phase group coil W2 occupies stator slots No. 25-29 and No. 38-42, and the spans of the five coils of the pole-phase group coil W2 are No.25 to No.42, No.26 to No.41, No.27 to No.40, No.28 to No.39, No.29 to No.38, wherein the pole-phase group coil V2 occupies stator slots No. 31-35 and No. 44-48, and the spans of the five coils of the pole-phase group coil V2 are No.31 to No.48, No.32 to No.47, No.33 to No.46, No.34 to No.45, No.35 to No.44; winding all the coils of the pole-phase group coils W2 and V2 on coil cups according to the corresponding span of each coil of the pole-phase group coils W2 and V2; rotating the stator core 120 degrees clockwise from the origin; pulling single-layer coils with the largest span into the small stator slots, and pulling other double-layer coils into the large stator slots;
a fourth time of embedding comprise: taking respective one pole-phase group coil V3 and W3 of two phases among three phases, arranging the two pole-phase group coils V3 and W3 in an overlapping manner, wherein the pole-phase group coil V3 occupies stator slots No. 8-12 and No. 67-71, and the spans of the five coils of the pole-phase group coil V3 are No.12 to No.67, No.11 to No.68, No.10 to No.69, No.9 to No.70, No.8 to No.71, wherein the pole-phase group coil W3 occupies stator slots No. 2-6 and No. 61-65, and the spans of the five coils of the pole-phase group coil W3 are No.6 to No.61, No.5 to No.62, No.4 to No.63, No.3 to No.64, No.2 to No.65; winding all the coils of the pole-phase group coils V3 and W3 on coil cups according to the corresponding span of each coil of the pole-phase group coils V3 and W3; rotating the stator core 60 degrees counterclockwise from the origin; pulling single-layer coils with the largest span into the small stator slots, and pulling other double-layer coils into the large stator slots;
a fifth time of embedding comprises: taking respective one pole-phase group coil U3 and V4 of each of two phases among three phases, arranging the two pole-phase group coils U3 and V4 in an overlapping manner, wherein the pole-phase group coil U3 occupies stator slots No. 68-72 and No. 55-59, and the spans of the five coils of the pole-phase group coil U3 are No.55 to No.72, No.56 to No.71, No.57 to No.70, No.58 to No.69, No.59 to No.68, wherein the pole-phase group coil V4 occupies stator slots No. 62-66 and No. 49-53, and the spans of the five coils of the pole-phase group coil V4 are No.49 to No.66, No.50 to No.65, No.51 to No.64, No.52 to No.63, No.53 to No.62; winding all the coils of the pole-phase group coils U3 and V4 on coil cups according to the corresponding span of each coil of the pole-phase group coils U3 and V4; rotating the stator core 120 degrees counterclockwise from the origin; pulling single-layer coils with the largest span into the small stator slots, and pulling other double-layer coils into the large stator slots; and
a sixth time of embedding comprises: taking respective one pole-phase group coil W4 and U4 of each of two phases among three phases, arranging the two pole-phase group coils W4 and U4 in an overlapping manner, wherein the pole-phase group coil W4 occupies stator slots No. 56-60 and No. 43-47, and the spans of the five coils of the pole-phase group coil W4 are No.43 to No.60, No.44 to No.59, No.45 to No.58, No.46 to No.57, No.47 to No.56, wherein the pole-phase group coil U4 occupies stator slots No. 50-54 and No. 37-41, and the spans of the five coils of the pole-phase group coil U4 are No.37 to No.54, No.38 to No.53, No.39 to No.52, No.40 to No.51, No.41 to No.50; winding all the coils of the pole-phase group coils W4 and U4 on coil cups according to the corresponding span of each coil of the pole-phase group coils W4 and U4; rotating the stator core 180 degrees counterclockwise from the origin; pulling single-layer coils with the largest span into the small stator slots, and pulling other double-layer coils into the large stator slots.

2. The automatic wire embedding method for single-and double-layer windings based on lamination having large-and small-slots according to claim 1, wherein slot insulations based on slot-shaped perimeters are respectively disposed in the large stator slots and the small stator slots.

3. The automatic wire embedding method for single-and double-layer windings based on lamination having large-and small-slots according to claim 1, wherein the small stator slot is a single-layer slot, and a single-layer coil is pulled into the small stator slot, followed by punching of cover paper.

4. The automatic wire embedding method for single-and double-layer windings based on lamination having large-and small-slots according to claim 1, wherein the large stator slot is a double-layer slot, and a double-layer coil is pressed by a coil pressing die after a lower layer side of the coil being embedded in the large stator slot, and an inter-layer phase segregated paper is punched.

## Patentansprüche

1. Automatisches Drahteinbettungsverfahren für Ein- und Doppelschichtwicklungen auf Basis einer Laminierung mit großen und kleinen Schlitzen, wobei die Anzahl der Statorschlitze eines Motors, in die die Wicklungen eingebettet werden sollen, 72 beträgt, darin eingeschlossen die Statorschlitze Nr. 1 bis Nr. 72, und die Anzahl von Phasen des Motors drei ist, wobei das Verfahren Folgendes umfasst: Durchführen von sechs Einbettungsvorgängen, um die Drahteinbettung der Wicklungen zu vervollständigen, und Einbetten einer jeweiligen Polphasengruppenspule für zwei Phasen aus drei Phasen bei jedem Einbettungsvorgang, wobei die Wicklungen Ein- und Doppelschichtwicklungen sind und jede Polphasengruppenspule aus fünf Spulen besteht, wobei eine Spule mit der größten Spannweite eine Einschichtspule ist und in kleine Statorschlitze gezogen wird, und die anderen vier Spulen Doppelschichtspulen sind und in große Statorschlitze gezogen werden, wobei
ein erster Einbettungsvorgang Folgendes umfasst: Anwenden einer jeweiligen Polphasengruppenspule U1 und W1 von zwei Phasen aus drei Phasen, Anordnen der zwei Polphasengruppenspulen U1 und W1 auf eine überlappende Weise, wobei die Polphasengruppenspule U1 die Statorschlitze Nr. 1-5 und Nr. 14-18 belegt und die Spannweiten der fünf Spulen der Polphasengruppenspule U1 Nr. 1 bis Nr. 18, Nr. 2 bis Nr. 17, Nr. 3 bis Nr. 16, Nr. 4 bis Nr. 15, Nr. 5 bis Nr. 14 sind, wobei die Polphasengruppenspule W1 die Statorschlitze Nr. 7-11 und Nr. 20-24 belegt und die Spannweiten der fünf Spulen der Polphasengruppenspule W1 Nr. 7 bis Nr. 24, Nr. 8 bis Nr. 23, Nr. 9 bis Nr. 22, Nr. 10 bis Nr. 21, Nr. 11 bis Nr. 20 sind; Wickeln aller Spulen der Polphasengruppenspulen U1 und W1 auf Spulenbecher entsprechend der jeweiligen Spannweite jeder Spule der Polphasengruppenspulen U1 und W1, Ziehen von Einschichtspulen mit der größten Spannweite in die kleinen Statorschlitze und Ziehen der anderen Doppelschichtspulen in die großen Statorschlitze;
ein zweiter Einbettungsvorgang Folgendes umfasst: Verwenden einer jeweiligen Polphasengruppenspule V1 und U2 von zwei Phasen aus drei Phasen, Anordnen der zwei Polphasengruppenspulen V1 und U2 auf eine überlappende Weise, wobei die Polphasengruppenspule V1 die Statorschlitze Nr. 13-17 und Nr. 26-30 belegt und die Spannweiten der fünf Spulen der Polphasengruppenspule V1 Nr.13 bis Nr.30, Nr.14 bis Nr.29, Nr.15 bis Nr.28, Nr.16 bis Nr.27, Nr.17 bis Nr. 26 sind, wobei die Polphasengruppenspule U2 die Statorschlitze Nr. 19-23 und Nr. 32-36 belegt und die Spannweiten der fünf Spulen der Polphasengruppenspule U2 Nr. 19 bis Nr. 36, Nr. 20 bis Nr. 35, Nr. 21 bis Nr. 34, Nr. 22 bis Nr. 33, Nr. 23 bis Nr. 32 sind; Wickeln aller Spulen der Polphasengruppenspulen V1 und U2 auf Spulenbecher entsprechend der jeweiligen Spannweite jeder Spule der Polphasengruppenspulen V1 und U2; Drehen des Statorkerns um 60 Grad im Uhrzeigersinn von einem Ursprung aus; Ziehen von Einschichtspulen mit der größten Spannweite in die kleinen Statorschlitze und Ziehen der anderen Doppelschichtspulen in die großen Statorschlitze;
ein dritter Einbettungsvorgang Folgendes umfasst: Verwenden einer jeweiligen Polphasengruppenspule W2 und V2 von zwei Phasen aus drei Phasen, Anordnen der zwei Polphasengruppenspulen W2 und V2 auf eine überlappende Weise, wobei die Polphasengruppenspule W2 die Statorschlitze Nr. 25-29 und Nr. 38-42 belegt und die Spannweiten der fünf Spulen der Polphasengruppenspule W2 Nr. 25 bis Nr. 42, Nr. 26 bis Nr. 41, Nr. 27 bis Nr. 40, Nr. 28 bis Nr. 39, Nr. 29 bis Nr. 38 sind, wobei die Polphasengruppenspule V2 die Statorschlitze Nr. 31-35 und Nr. 44-48 belegt und die Spannweiten der fünf Spulen der Polphasengruppenspule V2 Nr. 31 bis Nr. 48, Nr. 32 bis Nr. 47, Nr. 33 bis Nr. 46, Nr. 34 bis Nr. 45, Nr. 35 bis Nr. 44 sind; Wickeln aller Spulen der Polphasengruppenspulen W2 und V2 auf Spulenbecher entsprechend der jeweiligen Spannweite jeder Spule der Polphasengruppenspulen W2 und V2; Drehen des Statorkerns um 120 Grad im Uhrzeigersinn vom Ursprung aus; Ziehen von Einschichtspulen mit der größten Spannweite in die kleinen Statorschlitze und Ziehen der anderen Doppelschichtspulen in die großen Statorschlitze;
ein vierter Einbettungsvorgang Folgendes umfasst: Verwenden einer jeweiligen Polphasengruppenspule V3 und W3 von zwei Phasen aus drei Phasen, Anordnen der zwei Polphasengruppenspulen V3 und W3 auf eine überlappende Weise, wobei die Polphasengruppenspule V3 die Statorschlitze Nr. 8-12 und Nr. 67-71 belegt und die Spannweiten der fünf Spulen der Polphasengruppenspule V3 Nr. 12 bis Nr. 67, Nr. 11 bis Nr. 68, Nr. 10 bis Nr. 69, Nr. 9 bis Nr. 70, Nr. 8 bis Nr. 71 sind, wobei die Polphasengruppenspule W3 die Statorschlitze Nr. 2-6 und Nr. 61-65 belegt und die Spannweiten der fünf Spulen der Polphasengruppenspule W3 Nr. 6 bis Nr. 61, Nr. 5 bis Nr. 62, Nr. 4 bis Nr. 63, Nr. 3 bis Nr. 64, Nr. 2 bis Nr. 65 sind; Wickeln aller Spulen der Polphasengruppenspulen V3 und W3 auf Spulenbecher entsprechend der jeweiligen Spannweite jeder Spule der Polphasengruppenspulen V3 und W3; Drehen des Statorkerns um 60 Grad entgegen dem Uhrzeigersinn vom Ursprung aus; Ziehen von Einschichtspulen mit der größten Spannweite in die kleinen Statorschlitze und Ziehen der anderen Doppelschichtspulen in die großen Statorschlitze;
ein fünfter Einbettungsvorgang Folgendes umfasst: Verwenden einer jeweiligen Polphasengruppenspule U3 und V4 jeder von zwei Phasen aus drei Phasen, Anordnen der zwei Polphasengruppenspulen U3 und V4 auf eine überlappende Weise, wobei die Polphasengruppenspule U3 die Statorschlitze Nr. 68-72 und Nr. 55-59 belegt und die Spannweiten der fünf Spulen der Polphasengruppenspule U3 Nr. 55 bis Nr. 72, Nr. 56 bis Nr. 71, Nr. 57 bis Nr. 70, Nr. 58 bis Nr. 69, Nr. 59 bis Nr. 68 sind, wobei die Polphasengruppenspule V4 die Statorschlitze Nr. 62-66 und Nr. 49-53 belegt und die Spannweiten der fünf Spulen der Polphasengruppenspule V4 Nr. 49 bis Nr. 66, Nr. 50 bis Nr. 65, Nr. 51 bis Nr. 64, Nr. 52 bis Nr. 63, Nr. 53 bis Nr. 62 sind; Wickeln aller Spulen der Polphasengruppenspulen U3 und V4 auf Spulenbecher entsprechend der jeweiligen Spannweite jeder Spule der Polphasengruppenspulen U3 und V4; Drehen des Statorkerns um 120 Grad entgegen dem Uhrzeigersinn vom Ursprung aus; Ziehen von Einschichtspulen mit der größten Spannweite in die kleinen Statorschlitze und Ziehen der anderen Doppelschichtspulen in die großen Statorschlitze; und
ein sechster Einbettungsvorgang Folgendes umfasst: Verwenden einer jeweiligen Polphasengruppenspule W4 und U4 jeder von zwei Phasen aus drei Phasen, Anordnen der zwei Polphasengruppenspulen W4 und U4 auf eine überlappende Weise, wobei die Polphasengruppenspule W4 die Statorschlitze Nr. 56-60 und Nr. 43-47 belegt und die Spannweiten der fünf Spulen der Polphasengruppenspule W4 Nr. 43 bis Nr. 60, Nr. 44 bis Nr. 59, Nr. 45 bis Nr. 58, Nr. 46 bis Nr. 57, Nr. 47 bis Nr. 56 sind, wobei die Polphasengruppenspule U4 die Statorschlitze Nr. 50-54 und Nr. 37-41 belegt und die Spannweiten der fünf Spulen der Polphasengruppenspule U4 Nr. 37 bis Nr. 54, Nr. 38 bis Nr. 53, Nr. 39 bis Nr. 52, Nr. 40 bis Nr. 51, Nr. 41 bis Nr. 50 sind; Wickeln aller Spulen der Polphasengruppenspulen W4 und U4 auf Spulenbecher entsprechend der jeweiligen Spannweite jeder Spule der Polphasengruppenspulen W4 und U4; Drehen des Statorkerns um 180 Grad entgegen dem Uhrzeigersinn vom Ursprung aus; Ziehen von Einschichtspulen mit der größten Spannweite in die kleinen Statorschlitze und Ziehen der anderen Doppelschichtspulen in die großen Statorschlitze.

2. Automatisches Drahteinbettungsverfahren für Ein- und Doppelschichtwicklungen auf Basis einer Laminierung mit großen und kleinen Schlitzen nach Anspruch 1, wobei Schlitzisolierungen auf Basis von schlitzförmigen Umfängen jeweils in den großen Statorschlitzen und den kleinen Statorschlitzen angeordnet sind.

3. Automatisches Drahteinbettungsverfahren für Ein- und Doppelschichtwicklungen auf Basis einer Laminierung mit großen und kleinen Schlitzen nach Anspruch 1, wobei der kleine Statorschlitz ein Einschichtschlitz ist und eine Einschichtspule in den kleinen Statorschlitz gezogen wird, gefolgt vom Ausstanzen von Deckpapier.

4. Automatisches Drahteinbettungsverfahren für Ein- und Doppelschichtwicklungen auf Basis einer Laminierung mit großen und kleinen Schlitzen nach Anspruch 1, wobei der große Statorschlitz ein Doppelschichtschlitz ist und eine Doppelschichtspule durch eine Spulenpresse gepresst wird, nachdem eine untere Schichtseite der Spule in den großen Statorschlitz eingebettet wurde und ein Zwischenschicht-Phasentrennpapier ausgestanzt wurde.

## Revendications

1. Procédé d'insertion automatique de fils de bobinage pour des enroulements à une seule couche et à double couche basé sur un laminage ayant de grandes encoches et de petites encoches, dans lequel le nombre d'encoches de stator d'un moteur dont les enroulements doivent être insérés est de 72, à savoir les encoches de stator n° 1 à n° 72, et le nombre de phases du moteur est de trois, dans lequel le procédé comprend le fait de : réaliser six étapes temporelles d'insertion de fils de bobinage pour achever l'insertion de fils de bobinage des enroulements, et insérer une bobine de groupe pôle-phase respective pour deux phases parmi les trois phases à chaque étape temporelle d'insertion, dans lequel les enroulements sont des enroulements à une seule couche et à double couche, et chaque bobine de groupe pôle-phase se compose de cinq bobines dans lesquelles une bobine ayant une portée maximale est une bobine à une seule couche et est tirée dans de petites encoches de stator, et les quatre autres bobines sont des bobines à double couche et sont tirées dans de grandes encoches de stator, dans lequel,
une première étape temporelle d'insertion comprend le fait de : prendre une bobine de groupe pôle-phase U1 et une bobine de groupe pôle-phase W1 respectives de deux phases parmi trois phases, agencer les deux bobines de groupe pôle-phase U1 et W1 de manière superposée, dans laquelle la bobine de groupe pôle-phase U1 occupe les encoches de stator n° 1 à 5 et n° 14 à 18, et les portées des cinq bobines de la bobine de groupe pôle-phase U1 sont les portées n° 1 à n° 18, n° 2 à n° 17, n° 3 à n° 16, n° 4 à n° 15, n° 5 à n° 14, dans laquelle la bobine de groupe pôle-phase W1 occupe les encoches de stator n° 7 à 11 et n° 20 à 24, et les portées des cinq bobines de la bobine de groupe pôle-phase W1 sont les portées n° 7 à n° 24, n° 8 à n° 23, n° 9 à n° 22, n° 10 à n° 21, n° 11 à n° 20 ; enrouler toutes les bobines des bobines de groupe pôle-phase U1 et W1 sur des coupelles de bobine selon la portée correspondante de chaque bobine des bobines de groupe pôle-phase U1 et W1, tirer les bobines à une seule couche ayant la plus grande portée dans les petites encoches de stator, et tirer les autres bobines à double couche dans les grandes encoches de stator ;
une deuxième étape temporelle d'insertion comprend le fait de : prendre une bobine de groupe pôle-phase V1 et une bobine de groupe pôle-phase U2 respectives de deux phases parmi trois phases, agencer les deux bobines de groupe pôle-phase V1 et U2 de manière superposée, dans laquelle la bobine de groupe pôle-phase V1 occupe les encoches de stator n° 13 à 17 et n° 26 à 30, et les portées des cinq bobines de la bobine de groupe pôle-phase V1 sont les portées n° 13 à n° 30, n° 14 à n° 29, n° 15 à n° 28, n° 16 à n° 27, n° 17 à n° 26, dans laquelle la bobine de groupe pôle-phase U2 occupe les encoches de stator n° 19 à n° 23 et n° 32 à n° 36, et les portées des cinq bobines de la bobine de groupe pôle-phase U2 sont les portées n° 19 à n° 36, n° 20 à n° 35, n° 21 à n° 34, n° 22 à n° 33, n° 23 à n° 32 ; enrouler toutes les bobines des bobines de groupe pôle-phase V1 et U2 sur des coupelles de bobine selon la portée correspondante de chaque bobine des bobines de groupe pôle-phase V1 et U2 ; faire tourner le noyau de stator de 60 degrés dans le sens des aiguilles d'une montre à partir d'une origine ; tirer les bobines à une seule couche ayant la plus grande portée dans les petites encoches de stator, et tirer les autres bobines à double couche dans les grandes encoches de stator ;
une troisième étape temporelle d'insertion comprend le fait de : prendre une bobine de groupe pôle-phase W2 et une bobine de groupe pôle-phase V2 respectives de deux phases parmi trois phases, agencer les deux bobines de groupe pôle-phase W2 et V2 de manière superposée, dans laquelle la bobine de groupe pôle-phase W2 occupe les encoches de stator n° 25 à 29 et n° 38 à 42, et les portées des cinq bobines de la bobine de groupe pôle-phase W2 sont les portées n° 25 à n° 42, n° 26 à n° 41, n° 27 à n° 40, n° 28 à n° 39, n° 29 à n° 38, dans laquelle la bobine de groupe pôle-phase V2 occupe les encoches de stator n° 31 à 35 et n° 44 à 48, et les portées des cinq bobines de la bobine de groupe pôle-phase V2 sont les portées n° 31 à n° 48, n° 32 à n° 47, n° 33 à n° 46, n° 34 à n° 45, n° 35 à n° 44 ; enrouler toutes les bobines des bobines de groupe pôle-phase W2 et V2 sur des coupelles de bobine selon la portée correspondante de chaque bobine des bobines de groupe pôle-phase W2 et V2 ; faire tourner le noyau de stator de 120 degrés dans le sens des aiguilles d'une montre à partir de l'origine ; tirer les bobines à une seule couche ayant la plus grande portée dans les petites encoches de stator, et tirer les autres bobines à double couche dans les grandes encoches de stator ;
une quatrième étape temporelle d'insertion comprend le fait de : prendre une bobine de groupe pôle-phase V3 et une bobine de groupe pôle-phase W3 respectives de deux phases parmi trois phases, agencer les deux bobines de groupe pôle-phase V3 et W3 de manière superposée, dans laquelle la bobine de groupe pôle-phase V3 occupe les encoches de stator n° 8 à 12 et n° 67 à 71, et les portées des cinq bobines de la bobine de groupe pôle-phase V3 sont les portées n° 12 à n° 67, n° 11 à n° 68, n° 10 à n° 69, n° 9 à n° 70, n° 8 à n° 71, dans laquelle la bobine de groupe pôle-phase W3 occupe les encoches de stator n° 2 à 6 et n° 61 à 65, et les portées des cinq bobines de la bobine de groupe pôle-phase W3 sont les portées n° 6 à n° 61, n° 5 à n° 62, n° 4 à n° 63, n° 3 à n° 64, n° 2 à n° 65 ; enrouler toutes les bobines des bobines de groupe pôle-phase V3 et W3 sur des coupelles de bobine selon la portée correspondante de chaque bobine des bobines de groupe pôle-phase V3 et W3 ; faire tourner le noyau de stator de 60 degrés dans le sens inverse des aiguilles d'une montre à partir de l'origine ; tirer les bobines à une seule couche ayant la plus grande portée dans les petites encoches de stator, et tirer les autres bobines à double couche dans les grandes encoches de stator ;
une cinquième étape temporelle d'insertion comprend le fait de : prendre une bobine de groupe pôle-phase U3 et une bobine de groupe pôle-phase V4 respectives de chacune de deux phases parmi trois phases, agencer les deux bobines de groupe pôle-phase U3 et V4 de manière superposée, dans laquelle la bobine de groupe pôle-phase U3 occupe les encoches de stator n° 68 à 72 et n° 55 à 59, et les portées des cinq bobines de la bobine de groupe pôle-phase U3 sont les portées n° 55 à n° 72, n° 56 à n° 71, n° 57 à n° 70, n° 58 à n° 69, n° 59 à n° 68, dans laquelle la bobine de groupe pôle-phase V4 occupe les encoches de stator n° 62 à 66 et n° 49 à 53, et les portées des cinq bobines de la bobine de groupe pôle-phase V4 sont les portées n° 49 à n° 66, n° 50 à n° 65, n° 51 à n° 64, n° 52 à n° 63, n° 53 à n° 62 ; enrouler toutes les bobines des bobines de groupe pôle-phase U3 et V4 sur des coupelles de bobine selon la portée correspondante de chaque bobine des bobines de groupe pôle-phase U3 et V4 ; faire tourner le noyau de stator de 120 degrés dans le sens inverse des aiguilles d'une montre à partir de l'origine ; tirer les bobines à une seule couche ayant la plus grande portée dans les petites encoches de stator, et tirer les autres bobines à double couche dans les grandes encoches de stator ; et
une sixième étape temporelle d'insertion comprend le fait de : prendre une bobine de groupe pôle-phase W4 et une bobine de groupe pôle-phase U4 respectives de chacune de deux phases parmi trois phases, agencer les deux bobines de groupe pôle-phase W4 et U4 de manière superposée, dans laquelle la bobine de groupe pôle-phase W4 occupe les encoches de stator n° 56 à 60 et n° 43 à 47, et les portées des cinq bobines de la bobine de groupe pôle-phase W4 sont les portées n° 43 à n° 60, n° 44 à n° 59, n° 45 à n° 58, n° 46 à n° 57, n° 47 à n° 56, dans laquelle la bobine de groupe pôle-phase U4 occupe les encoches de stator n° 50 à 54 et n° 37 à 41, et les portées des cinq bobines de la bobine de groupe pôle-phase U4 sont les portées n° 37 à n° 54, n° 38 à n° 53, n° 39 à n° 52, n° 40 à n° 51, n° 41 à n° 50 ; enrouler toutes les bobines des bobines de groupe pôle-phase W4 et U4 sur des coupelles de bobine selon la portée correspondante de chaque bobine des bobines de groupe pôle-phase W4 et U4 ; faire tourner le noyau de stator de 180 degrés dans le sens inverse des aiguilles d'une montre à partir de l'origine ; tirer les bobines à une seule couche ayant la plus grande portée dans les petites encoches de stator, et tirer les autres bobines à double couche dans les grandes encoches de stator.

2. Procédé d'insertion automatique de fils de bobinage pour des enroulements à une seule couche et à double couche basé sur un laminage ayant de grandes encoches et de petites encoches selon la revendication 1, dans lequel des isolements d'encoches basés sur des périmètres en forme d'encoches sont respectivement disposés dans les grandes encoches de stator et les petites encoches de stator.

3. Procédé d'insertion automatique de fils de bobinage pour des enroulements à une seule couche et à double couche basé sur un laminage ayant de grandes encoches et de petites encoches selon la revendication 1, dans lequel la petite encoche de stator est une encoche à une seule couche, et une bobine à une seule couche est tirée dans la petite encoche de stator, après quoi un papier de couverture est perforé.

4. Procédé d'insertion automatique de fils de bobinage pour des enroulements à une seule couche et à double couche basé sur un laminage ayant de grandes encoches et de petites encoches selon la revendication 1, dans lequel la grande encoche de stator est une encoche à double couche, et une bobine à double couche est pressée par une matrice de pressage de bobine après l'insertion d'une face de couche inférieure de la bobine dans la grande encoche de stator, et un papier à ségrégation de phases inter-couches est perforé.
